# DEMANDE DE BREVET EUROPEEN

(11) **EP 1 113 062 A1**
(43) Date de publication de la demande: **04.07.2001**
(21) Numéro de dépôt: 00403358.5
(22) Date de dépôt: 30.11.2000
(51) Int. Cl.: C09J 7/02

(54) **Feuille de mousse adhésive enroulable sans protecteur.**

(30) Priorité: 22.12.1999 FR 9916275
(71) Demandeur: PLASTO S.A., 21300 Chenôve (FR)
(72) Inventeur: Durand, Hervé, 21000 Dijon (FR)
(74) Mandataire: Hubert, Philippe

(57) **Abrégé**

Elle est caractérisée en ce que la matière alvéolaire est une mousse de polyoléfine dont au moins la première face est adhésivée et dont l'autre deuxième face non adhésivée est dépourvue de tout traitement anti-adhérent, ladite première face se présentant sous la forme d'une peau avec un aspect sensiblement continu et ne comportant pratiquement pas de cellules ouvertes, ladite masse adhésive étant sensible à la pression et fortement cohésive.

## Description

La présente invention concerne une feuille en mousse de polyoléfine adhésivée sur l'une de ses faces et enroulable ou empilable sans protecteur.

### Art antérieur

On connaît déjà des feuilles de mousse, par exemple en polyéthylène ou en polypropylène, qui sont recouvertes d'une masse adhésive sensible à la pression sur toute leur surface ou seulement sur une partie de leur surface dans le but d'être fixées facilement sur un support. Par exemple, FR 2 749 808 décrit un panneau d'étanchéité pour portières de voiture en mousse de polyoléfine adhésivée au moyen d'un cordon auto-adhésif. Toutefois, il est nécessaire soit de protéger la partie adhésive par une feuille antiadhérente pelable, soit, si l'on souhaite éviter l'utilisation d'un protecteur, pour stocker les feuilles sous forme de pile, de traiter la seconde face non recouverte d'adhésif, au moyen d'un produit antiadhérent à base de silicones. La présence de cette feuille antiadhérente d'une part augmente les coûts de fabrication et d'autre part génère des déchets dans les ateliers où sont utilisées les feuilles ou les bandes adhésives.

On connaît également des rubans de mousse à cellules fermées, adhésivées sur une face et enroulables sans protecteur, utilisés dans le domaine de l'isolation des portes et fenêtres. Il s'agit alors de mousses de polychlorure de vinyle (PVC) qui sont recouvertes, sur la face non adhésive, d'un film antiadhérent. De tels rubans nécessitent d'être traités sur une face pour rendre cette dernière non adhérente ; de plus ils ne sont pas utilisables dans les automobiles en raison de la nature du constituant et d'un manque de résistance à la température. Leur utilisation pour l'enrubannage des câbles n'est pas non plus possible en raison du caractère antiadhérent trop marqué de la face non adhésivée qui ne permet pas une liaison adhésive suffisante entre les spires.

On connaît aussi, selon US 4.484.574, une bande de mousse de polyéthylène réticulé à cellules fermées, adhésivée sur l'une de ses faces et enroulable sans nécessité d'interposer un papier protecteur. Ce produit est destiné à une utilisation dans le domaine médical, notamment pour maintenir des pansements tout en protégeant des chocs en raison de l'utilisation d'une mousse souple. Ce produit ne convient toutefois pas pour satisfaire à une utilisation dans le domaine de l'industrie automobile qui nécessite à la fois un pouvoir adhésif plus marqué et une résistance à des températures supérieures à 100 °C.

Dans le domaine technique de l'invention, c'est à dire essentiellement la construction d'automobiles, il est important de pouvoir disposer de matériaux ne propageant pas les flammes.

A cet effet, les constructeurs ont mis en place des normes définissant des limites à la propagation de la flamme par les matériaux, lesdites normes devant être respectées pour garantir une meilleure sécurité des utilisateurs en cas d'incendie.
Ces normes sont, par exemple le règlement USA FMVSS 302, la norme française NF ISO 3795, la méthode d'essai des constructeurs d'automobile français D45 1333. D'une façon générale, la vitesse de combustion horizontale doit être inférieure à 100 mm/mn ou, mieux, le produit doit être autoextinguible. Or l'expérience montre qu'il est très difficile, voire impossible, de satisfaire à ces normes lorsque l'on doit utiliser un revêtement antiadhérent sur la face des feuilles ou bandes adhésives non enduite de masse adhésive. La seule présence d'une couche de produit antiadhérent à base de silicones sur la bande adhésive provoque une augmentation importante de l'inflammabilité, avec des vitesses de propagation de la flamme supérieures à 100 mm/mn. Dans ce domaine technique, il existe un besoin de procurer des feuilles adhésivées en mousse de polymère qui soient empilables ou enroulables sans nécessité d'interposer un protecteur et qui opposent, en caractéristique complémentaire, une bonne résistance à la propagation des flammes.

### Objet de l'invention

La présente invention propose une mousse de polyoléfine adhésive, sous forme d'une feuille ou d'un ruban adhésivé sur l'une de ses faces et dont plusieurs feuilles ou plusieurs bandes peuvent être superposées face adhésive contre face non adhésive sans nécessité de les séparer par un protecteur antiadhérent et sans obligation de traiter la face non adhésive par un traitement antiadhérent.

La présente invention propose également une mousse de polyoléfine adhésive enroulable ou empilable sans nécessité d'interposer un protecteur, et présentant une résistance à la propagation des flammes conforme aux normes de l'industrie automobile.

### Description

La feuille de matière alvéolaire adhésive selon l'invention est constituée d'une feuille de mousse de polyoléfine, préférentiellement une mousse de polypropylène non réticulé à cellules essentiellement fermées, dont au moins la face enduite d'une couche de masse adhésive se présente sous la forme d'une peau. L'utilisation d'une masse adhésive de type acrylique fortement réticulée permet d'obtenir une feuille de mousse adhésivée sur l'une de ses faces qui peut être présentée sous forme d'une pile ou d'une bande enroulée sans qu'il ne soit nécessaire d'interposer un protecteur antiadhérent et sans qu'il ne soit nécessaire de traiter la face non adhésivée avec un revêtement antiadhérent.

Selon une caractéristique complémentaire, la feuille adhésive selon l'invention présente une vitesse de propagation de flamme inférieure à 100 mm/mn.

Cette feuille adhésivée peut également être thermoformée pour obtenir des panneaux de forme complexe, adhésivés sur toute leur surface et empilables sans protecteur. Ces panneaux sont utiles pour constituer des pièces d'étanchéité ou d'isolation, notamment dans les automobiles.

La feuille adhésivée peut également être découpée en bandes enroulables sans protecteur, utilisables dans le domaine du gainage de faisceaux de fils ou pour former des bandes de protection contre les chocs.

### Description détaillée

La feuille de mousse de polypropylène adhésivée est constituée d'une feuille de polypropylène alvéolaire, recouverte sur la face qui se présente sous la forme d'une peau, par une couche de masse adhésive acrylique hautement cohésive.

Une surface est dite sous la forme d'une peau lorsque la quasi-totalité des cellules débouchant sur ladite surface sont fermées ou en d'autres termes lorsque la surface présente un aspect continu qui peut être lisse ou rugueux sans cellules ouvertes ou cavités apparentes en surface.

La feuille de polypropylène alvéolaire est constituée majoritairement de polypropylène non réticulé auquel on peut ajouter des additifs assouplissants tels que du polyéthylène, de l'EVA (éthylvinylacétate) et certains élastomères de synthèse afin de diminuer la rigidité de la feuille. Parmi les constituants de la feuille de mousse, on peut également ajouter des agents retardateurs de flamme ou agents ignifugeants qui rendent la feuille de mousse non inflammable. Ce type de composition est préféré pour les applications dans le domaine de la construction d'automobiles. La feuille, dont l'épaisseur peut être comprise entre 1 et 5 mm, préférentiellement 1 à 3 mm, présente au moins une de ses faces et préférentiellement ses deux faces sous forme d'une peau lisse ou légèrement rugueuse. Les cellules de la mousse sont essentiellement fermées et la densité est comprise entre 25 et 100 kg/m³, préférentiellement 32 à 45 kg/m³.

Le choix d'une mousse de faible densité permet d'obtenir un ruban sécable à la main, sans outil, compatible avec la réalisation manuelle du gainage des faisceaux de fils.

La mousse présente également des propriétés d'amortissement des bruits intéressantes dans le cas de l'application au gainage des faisceaux.

La feuille de mousse peut présenter ses deux faces sous forme d'une peau plus ou moins lisse ou avec des rugosités différentes. Lorsque les deux faces présentent une planéité ou rugosité différente, on choisira d'enduire d'adhésif la face la plus lisse.

La matière utilisée conduit à une mousse translucide, mais on peut aussi ajouter des colorants qui rendent la feuille opaque. A titre d'exemple convenant pour réaliser l'invention, on peut citer les feuilles de mousse de polypropylène commercialisées par la société TENNECO sous la référence P530.

La masse adhésive est de type acrylique fortement réticulée pour obtenir une forte cohésion. L'enduction est faite à partir d'une solution de la masse dans un solvant, de façon à obtenir un dépôt de l'ordre de 20 à 60 g/m². Les masses adhésives convenant pour réaliser l'invention doivent présenter une forte cohésion pour ne pas se délaminer lors du déroulage de la bande ; notamment cette propriété de forte cohésion intrinsèque de la masse adhésive peut être mise en évidence par sa résistance au fluage sous contrainte à chaud ; par exemple sa tenue au fluage à chaud est supérieure à 0,5 kg à une température de 100 °C. (Le test utilisé consiste à fixer sur une hauteur de 50 mm, une bande adhésive sur une plaque d'acier ou de verre verticale et suspendre à la bande un poids égal à 0,5 kg par cm de largeur de la bande. Placé dans une enceinte chauffée à 100 °C, on ne doit pas observer de fluage pendant au moins 30 minutes). Le pouvoir adhésif de la masse adhésive dépend de l'utilisation envisagée et peut être compris entre 1,5 et 12N/cm (pouvoir adhésif mesuré à 90° sur une plaque de verre). Compte tenu de la faible tension de surface naturelle de la feuille de mousse de polypropylène (inférieure à 30 mJ/m²) ainsi que son aspect non régulier en surface, le pouvoir adhésif de la masse sur la seconde face de la feuille de mousse n'est que de 0,5 à 1,7 N/cm environ et permet un décomplexage facile de la bande enroulée sans protecteur.

Selon un type de formulation de masse adhésive préférée pour les applications dans l'industrie des automobiles, on mélange aux polymères acryliques des additifs retardateurs de flamme liquides ou solides, tels que par exemple du phosphate de 1,3-dichloro-2-propanol et/ou des paraffines halogénées, dans le but d'obtenir une masse adhésive non inflammable ou au moins inapte à propager les flammes.

Le procédé de fabrication de la feuille adhésivée peut faire appel à différentes techniques connues d'enduction à partir d'une masse adhésive en phase solvant. Toutefois, en raison d'une planéité imparfaite de la surface de la feuille de mousse, on préfère un procédé d'enduction par transfert, en préparant préalablement la couche adhésive sur un papier ou un support antiadhérent. On obtient ainsi une couche de masse adhésive d'épaisseur régulière que l'on complexe sur une face formant peau de la feuille de mousse de polypropylène. De façon à améliorer l'accrochage de la couche adhésive, la face de la feuille de mousse destinée à être recouverte de l'adhésif est préalablement soumise à un traitement électrique corona qui augmente sensiblement la tension de surface de cette face de la feuille.

Après complexage de la feuille de mousse et de la couche de masse adhésive, le papier antiadhérent utilisé pour la technique de transfert est retiré pour être éventuellement recyclé et la feuille adhésive est découpée en bandes pour être utilisée ensuite sous forme de rouleaux. On peut également découper la feuille selon des pièces, par exemple des obturateurs, qui peuvent être thermoformées et empilées sans protecteur avant utilisation. Dans ce cas, le thermoformage est fait par dépression sur un moule sans contre empreinte, en plaçant la face non adhésivée contre le moule.

### Exemples de réalisation

1) Une feuille de mousse de polypropylène à cellules fermées de couleur noire, d'épaisseur 1,5 mm environ et de densité 45 kg/m³ (commercialisée sous la référence P530 par la société TENNECO) est soumise à un traitement corona sur l'une de ses faces puis ladite face traitée est complexée par transfert avec une couche de masse adhésive acrylique (de type XPE 376 fournie en phase solvant par la société A.V. Chemie). La quantité de masse adhésive ainsi déposée est d'environ 40 g/m².

Après complexage, la feuille antiadhérente de transfert est séparée pour être recyclée. La feuille de mousse adhésivée est ensuite découpée en bandes de largeur de 1,5 à 3 cm environ, qui sont enroulées sans protecteur. Au déroulage, la face adhésive se sépare régulièrement et correctement de la face non adhésivée. Ces rouleaux trouvent leur application pour gainer les faisceaux de fils par enrubannage (enroulement en spirale) ou par pliage longitudinal autour du faisceau et fermeture de la gaine par jonction des deux lisières adhésives (jonction en drapeau).

La feuille adhésivée peut également être découpée pour obtenir des éléments d'étanchéité ou des obturateurs que l'on peut thermoformer si les structures à recouvrir présentent des formes complexes en relief. Dans ce cas, la feuille est placée sur le moule, face non adhésive contre le moule, chauffée par rayonnement infrarouge, puis mise en forme par dépression. Les pièces obtenues sont ensuite stockées en pile sans protecteur, en intercalant éventuellement un fragment de papier antiadhérent sur un bord de façon à faciliter l'amorce de la séparation au moment de l'utilisation en atelier.

2) Selon un second exemple de réalisation de l'invention, dans le but d'obtenir une feuille de mousse adhésive ignifugée, on utilise une feuille de mousse de polypropylène à cellules fermées, formulée avec des additifs retardateurs de flamme. L'épaisseur de la feuille de mousse à double peau est de 2,5 mm environ et sa densité est de 50 kg/m³. La masse acrylique utilisée est analogue à la masse acrylique mise en oeuvre à l'exemple 1,mais contient en plus 15 parts de phosphate de 1,3-dichloro-2-propanol et 15 parts de paraffine chlorée pour 100 parts de masse adhésive en solution, ces composants permettant d'obtenir un adhésif non inflammable. La masse acrylique ainsi formulée est enduite par transfert sur l'une des faces de la feuille de masse, après traitement Corona de ladite face. On obtient ainsi une feuille de mousse de propylène adhésivée présentant des caractéristiques satisfaisantes de pouvoir adhésif, de déroulabilité et de résistance à la propagation de la flamme.

A titre de comparaison pour évaluer les propriétés de résistance à la propagation de la flamme, on a réalisé une mousse de polypropylène très chargée (10 % en masse) en retardateur de flamme. Cette feuille de mousse seule est autoextinguible (la flamme s'éteint). Cette mousse, contenant une grande quantité d'agent ignifuge, a été traitée par un revêtement antiadhérent classique à base de silicones réticulables sous rayonnement U.V. La feuille de mousse ainsi traitée devient complètement combustible et brûle avec une vitesse de propagation de flamme supérieure à 100 mm/mn.

Cette même feuille de mousse contenant des quantités importantes d'ignifugeants, a été traitée, selon un second essai comparatif, au moyen de silicones antiadhérents spécialement formulés pour ne pas propager la flamme, utilisés habituellement pour l'enduction des air-bags dans les automobiles (SILCOLEASE résine R429 commercialisé par la société Rhodia). Des couches extrêmement fines (0,01 µm) de cet antiadhérent ont été appliquées par la technologie du « reverse roll ». La réticulation du revêtement antiadhérent a été obtenue par polycondensation avec un catalyseur à base d'étain. La feuille de mousse ainsi traitée pour présenter une face antiadhérente devient combustible et ne satisfait plus au test (la vitesse de propagation de la flamme est supérieure à 100 mm/mn).

Ces deux essais comparatifs témoignent de la difficulté à obtenir une mousse de polyoléfine adhésive et enroulable satisfaisant aux impératifs de l'industrie automobile en matière de sécurité.

Selon une variante de l'invention, on peut intercaler entre la couche de masse adhésive et la feuille de mousse, un film de polypropylène flammé sur la feuille de mousse, dans le but d'assurer une excellente étanchéité au complexe adhésivé.

La feuille adhésivée selon l'invention trouve ses applications dans la construction des automobiles pour le gainage des faisceaux, pour fabriquer des panneaux d'étanchéité, des obturateurs ou pour garnir certains compartiments. La liaison intime entre la couche adhésive et la face lisse de la feuille de mousse permet d'obtenir un collage étanche des obturateurs sur les tôles peintes. On peut également l'utiliser avantageusement dans le domaine de l'emballage ou du calage quand il y a nécessité de protéger des objets fragiles.

Dans le cas d'utilisation pour le gainage des faisceaux de fils, le ruban peut être enroulé en spirale autour du faisceau, chaque spire recouvrant une partie de la spire précédente (enrubannage) ou il peut être replié en U, parallèlement à sa longueur, en fixant ensemble les deux lisières latérales en clip ou en cavalier.

Cette application au gainage des faisceaux de fils concerne notamment l'industrie automobile, mais aussi les équipements électroménagers et les installations de contrôle commande dans l'industrie en général. Dans le domaine de la construction des automobiles, on utilise de préférence les feuilles de mousse de polypropylène adhésivées et traitées contre la propagation de la flamme.

## Revendications

1. Feuille de matière alvéolaire à cellules fermées adhésivée sur l'une de ses faces caractérisée en ce que la matière alvéolaire est une mousse de polypropylène non réticulé, éventuellement formulé avec des additifs assouplissants, dont au moins la première face est adhésivée et dont l'autre deuxième face non adhésivée est dépourvue de tout traitement anti-adhérent, ladite première face se présentant sous la forme d'une peau avec un aspect sensiblement continu et ne comportant pratiquement pas de cellules ouvertes, ladite masse adhésive étant sensible à la pression et fortement cohésive.

2. Feuille de matière alvéolaire adhésivée selon la revendication 1, caractérisée en ce que la masse adhésive sensible à la pression est une masse acrylique en phase solvant fortement réticulée.

3. Feuille de matière alvéolaire adhésivée selon la revendication 1 ou 2, caractérisée en ce que la masse adhésive présente une tenue au fluage à chaud supérieure à 0,5 kg/cm à 100°C.

4. Feuille de matière alvéolaire adhésivée selon les revendications 1 à 3 caractérisée en ce que les deux faces de la feuille avant enduction se présentent sous forme d'une peau, les deux faces pouvant présenter une rugosité de surface différenciée.

5. Feuille de matière alvéolaire adhésivée selon l'une des revendications 1 à 4, caractérisée en ce que la première face subit un traitement électrique corona avant complexage par transfert de la couche de masse adhésive.

6. Feuille de matière alvéolaire adhésivée selon l'une des revendications 1 à 5, caractérisée en ce que la matière de la feuille et/ou la masse adhésive contiennent des agents ignifugeants.

7. Feuille de matière alvéolaire adhésivée selon la revendication 6, caractérisée en ce qu'elle présente une vitesse de propagation de la flamme inférieure à 100 mm/mn.

8. Feuille de matière alvéolaire adhésivée selon l'une des revendications 1 à 7 caractérisée en ce qu'elle est susceptible d'être enroulée sous forme d'une bande sans protecteur intermédiaire antiadhérent et sans traitement antiadhérent sur la face non adhésivée.

9. Feuille de matière alvéolaire adhésivée selon l'une des revendications 1 à 7, caractérisée en ce qu'elle est empilable sous forme d'une pile sans protecteur intermédiaire antiadhérent et sans traitement antiadhérent sur la face non adhésivée.

10. Feuille de matière alvéolaire adhésivée selon la revendication 9, caractérisée en ce qu'elle est thermoformable.

11. Gaine de faisceau de fils caractérisée en ce qu'elle est obtenue par enroulement en spirales, en cavalier ou en clip d'un ruban adhésif selon la revendication 8.

12. Obturateur d'étanchéité pour automobile, éventuellement thermoformé, caractérisé en ce qu'il est obtenu au départ d'une feuille adhésive selon l'une des revendications 1 à 10.
